(19) Europäisches Patentamt
European Patent Office
Office européen des brevets

(11) **EP 1 252 001 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(21) Anmeldenummer: **01921141.6**

(22) Anmeldetag: **02.02.2001**

(51) Int Cl.⁷: **B25J 9/16**

(86) Internationale Anmeldenummer:
**PCT/DE2001/000412**

(87) Internationale Veröffentlichungsnummer:
**WO 2001/056752 (09.08.2001 Gazette 2001/32)**

(54) **VERFAHREN ZUM RECHNERGESTÜTZTEN BEARBEITEN EINER STRUKTUR UMFASSEND EIN ERSTES ELEMENT UND EIN ZWEITES ELEMENT, WELCHE ZUSAMMENGEHÖRIG SIND**

METHOD FOR COMPUTER ASSISTED PROCESSING OF A STRUCTURE COMPRISING A FIRST ELEMENT AND A SECOND ELEMENT BELONGING TOGETHER

PROCEDE D'USINAGE ASSISTE PAR ORDINATEUR D'UNE STRUCTURE COMPRENANT UN PREMIER ELEMENT ET UN SECOND ELEMENT

(84) Benannte Vertragsstaaten:
**DE FR GB NL SE**

(30) Priorität: **02.02.2000 DE 10004409**

(43) Veröffentlichungstag der Anmeldung:
**30.10.2002 Patentblatt 2002/44**

(73) Patentinhaber: **SIEMENS AKTIENGESELLSCHAFT**
**80333 München (DE)**

(72) Erfinder:
• **FEITEN, Wendelin**
**85579 Neubiberg (DE)**
• **RENCKEN, Wolfgang**
**91074 Herzogenaurach (DE)**

(56) Entgegenhaltungen:
WO-A-96/07959     DE-A- 4 408 329
DE-A- 19 602 470     GB-A- 2 099 255
US-A- 4 928 175     US-A- 5 040 116
US-A- 5 428 280

• **DATABASE WPI Section EI, Week 199849 Derwent Publications Ltd., London, GB; Class T06, AN 1998-578357 XP002176758 & JP 10 260724 A (YASKAWA ELECTRIC CORP), 29. September 1998 (1998-09-29)**

EP 1 252 001 B1

# EP 1 252 001 B1

**Beschreibung**

Die Erfindung betrifft eine rechnergestutzte Bearbeitung einer Struktur umfassend ein erstes Element und ein zweites Element, welche zusammengehörig sind.

Ein solches Verfahren ist aus [1] bekannt.

Bei dem aus [1] bekannten Verfahren zur Orientierung eines Roboters in einem vorgegebenen Raum wird eine elektronische Landkarte von dem vorgegebenen Raum erstellt. Unter Verwendung der elektronischen Landkarte bestimmt der Roboter seine Position in dem vorgegebenen Raum und orientiert sich in dem vorgegebenen Raum.

Bei der Erstellung der elektronischen Landkarte werden Umgebungselemente in dem Raum von dem Roboter mit einem Aufnahmemittel, zum Beispiel einem Laserscanner oder einer Kamera, aufgenommen. Die Aufnahmen werden digitalisiert und in einer Recheneinheit, mit der der Roboter eingerichtet ist, gespeichert, so daß die Aufnahmen als digitalisierte Bilder in dem Roboter vorliegen.

Die aufgenommenen Umgebungselemente aus den digitalisierten Bildern werden durch einfache geometrische Basiselemente, zum Beispiel Punkte oder Linien, idealisiert und zumindest teilweise zu zusammenhangenden Strukturen, zum Beispiel zu Polygonzügen, zusammengefaßt.

Einzelne, nicht zusammengefaßte Basiselemente und die zusammenhängenden Strukturen werden in die elektronische Landkarte eingetragen.

Auf diese Weise wird von dem Roboter die elektronische Landkarte erstellt, die den vorgegebenen Raum repräsentiert.

Unter Verwendung der Landkarte orientiert sich der Roboter in dem vorgegebenen Raum derart, daß der Roboter, der sich an einer aktuellen Position in dem Raum befindet, mit dem Aufnahmemittel einen Bildbereich in dem Raum aufnimmt. Die Aufnahme wird wie bei der Erstellung der elektronischen Landkarte digitalisiert, aufgenommene Umgebungselemente werden idealisiert und gespeichert.

Anschließend versucht der Roboter, den aufgenommenen Bildbereich in Übereinstimmung mit der gespeicherten Landkarte zu bringen, um somit Information zu seiner aktuellen Position und zu seiner Orientierung zu ermitteln.

Bei der Ermittlung der Übereinstimmung wird eine erste Struktur umfassend zumindest ein Basiselement, das den aufgenommenen Bildbereich charakterisiert, mit mindestens einer zweiten vorgegebenen Struktur umfassend zumindest ein Basiselement aus der elektronischen Landkarte verglichen.

Bei dem aus [1] bekannten Verfahren erfolgt die Erstellung der elektronischen Landkarte und die Orientierung des Roboters gleichzeitig, so daß während einer Bewegung des Roboters in dem vorgegebenen Raum in periodischen Abständen eine aktualisierte elektronische Landkarte von dem Raum ermittelt wird.

Dieser Ansatz birgt insbesondere den Nachteil in sich, daß er nicht robust ist gegenüber Fehlern in Aufnahmen, die von einem Roboter zu seiner Orientierung in dem vorgegebenen Raum, welcher durch die elektronische Landkarte repräsentiert wird, gemacht werden.

Wenn von dem Roboter bei der Bearbeitung einer Struktur zusammenhängender Basiselemente die erste Struktur aus einem aktuell aufgenommenen Bildausschnitt mit der zweiten Struktur aus der elektronischen Landkarte verglichen wird, so ist das aus [1] bekannte Verfahren nicht ausreichend robust, um zu Ergebnissen ausreichender Qualität zu führen.

Somit liegt der Erfindung das Problem zugrunde, ein Verfahren und eine Anordnung zum rechnergestützten Bearbeiten einer Struktur zusammengehöriger Elemente anzugeben, welches robust ist gegen mögliche Aufnahmefehler sowie schneller durchführbar ist mit geringerem Rechenaufwand als die bekannten Verfahren.

Das Problem wird durch das Verfahren sowie die Anordnung mit den Merkmalen gemäß dem jeweiligen unabhängigen Anspruch gelöst.

Bei dem Verfahren zum rechnergestützten Bearbeiten einer Struktur umfassend ein erstes Element und ein zweites Element, welche zusammengehörig sind, wird unter Verwendung einer ersten Position des ersten Elements und einer veränderten zweiten Position des ersten Elements eine dritte Position des ersten Elements ermittelt. Bei der Bearbeitung der Struktur wird unter Verwendung der dritten Position des ersten Elements zumindest eine vierte Position des zweiten Elements der Struktur verändert.

Die Anordnung zum rechnergestützten Bearbeiten einer Struktur umfassend ein erstes Element und ein zweites Element, welche zusammengehörig sind, weist einen Prozessor auf, der derart eingerichtet ist, daß folgende Schritte durchfuhrbar sind, - unter Verwendung einer ersten Position des ersten Elements und einer veränderten zweiten Position des ersten Elements wird eine dritte Position des ersten Elements ermittelt; - bei der Bearbeitung der Struktur wird unter Verwendung der dritten Position des ersten Elements zumindest eine vierte Position des zweiten Elements der Struktur verändert.

Die Anordnung ist insbesondere geeignet zur Durchführung des erfindungsgemäßen Verfahrens oder einer deren nachfolgend erläuterten Weiterbildungen.

Bevorzugte Weiterbildungen der Erfindung ergeben sich aus den abhängigen Ansprüchen.

Die im weiteren beschriebenen Weiterbildungen beziehen sich sowohl auf das Verfahren als auch auf die Anordnung.

Die Erfindung und die im weiteren beschriebenen Weiterbildungen konnen sowohl in Software als auch in Hardware, beispielsweise unter Verwendung einer speziellen elektrischen Schaltung realisiert werden.

Ferner ist eine Realisierung der Erfindung oder einer im weiteren beschriebenen Weiterbildung möglich durch ein computerlesbares Speichermedium, auf welchem ein Computerprogramm gespeichert ist, welches die Erfindung oder Weiterbildung ausführt.

Auch können die Erfindung und/oder jede im weiteren beschriebene Weiterbildung durch ein Computerprogrammerzeugnis realisiert sein, welches ein Speichermedium aufweist, auf welchem ein Computerprogramm gespeichert ist, welches die Erfindung und/oder Weiterbildung ausführt.

In einer Weiterbildung wird ein Element mindestens durch einen Punkt und eine Linie vorgebbarer Form beschrieben.

In einer weiteren Ausgestaltung wird eine Position eines Elements durch den Punkt des Elements und eine Orientierung, welche die Linie des Elements aufweist, beschrieben.

In einer Weiterbildung wird die dritten Position des ersten Elements derart ermittelt, daß ein Winkel zwischen einer ersten Orientierung der ersten Position des ersten Elements und einer zweiten Orientierung der zweiten Position des ersten Elements ermittelt wird, der Winkel gemittelt wird und eine Richtung des gemittelten Winkels eine dritte Orientierung der dritten Position des ersten Elements beschreibt.

Die vierte Position des zweiten Elements wird in einer Ausgestaltung derart verändert, daß eine Energie, welche für eine Veränderung zumindest einer Position des ersten Elements und einer Position des zweiten Elements aufgewendet werden muß, minimiert wird.

Die Struktur bzw. die bearbeitete Struktur kann in einer Landkarte enthalten sein bzw. eingetragen werden, welche mit einem Aufnahmemittel, zum Beispiel einem akustischen und/oder einem optischen Aufnahmemittel, insbesondere eines Laserscanners und/oder einer Kamera, aus einer Umgebung als Szene aufgenommen wird. In diesem Fall gilt es, die aufgenommenen Strukturen mit einer gespeicherten Struktur zu vergleichen, um sich somit zu orientieren oder eine Landkarte aufzubauen oder zu bearbeiten.

In einer Weiterbildung wird die Karte zu einer Fahrwegplanung einer mobilen autonomen Vorrichtung eingesetzt.

Die Erfindung kann bevorzugt eingesetzt werden zur Orientierung einer mobilen autonomen Vorrichtung, beispielsweise eines Roboters, oder auch zur Ermittlung einer Landkarte zur Orientierung der mobilen autonomen Vorrichtung. In diesem Fall repräsentiert ein Element ein physikalisches Objekt.

Darüber hinaus kann die Erfindung zur Überwachung und/oder Steuerung der mobilen autonomen Vorrichtung eingesetzt werden.

Unter Verwendung der Landkarte und der darin enthaltenen Struktur kann eine aktuelle Position von der mobilen autonomen Vorrichtung in der Landkarte und/oder ein Fahrweg der mobilen autonomen Vorrichtung ermittelt werden.

In einer Weiterbildung wird die mobile autonome Vorrichtung unter Verwendung der Struktur und/oder der bearbeiteten Struktur überwacht und/oder gesteuert.

Ausfuhrungsbeispiele der Erfindung sind in Figuren dargestellt und werden im Weiteren näher erläutert.

Es zeigen

| | |
|---|---|
| Figuren 1a und 1b | eine Skizze eines Gangs, in dem sich ein Roboter orientieren soll (Figur la) sowie eine symbolische Skizze der Aufnahmen des Roboters und deren Umsetzung in eine Landkarte, wobei ein Fehler bei der Ermittlung der Landkarte und dessen Auswirkungen auf die Abbildung des Gangs gegenüber dem tatsachlichen Gang aus Figur 1a dargestellt ist (Figur 1b); |
| Figur 2 | eine Skizze eines Roboters mit Aufnahmemitteln; |
| Figuren 3a bis 3c | Skizzen jeweils eines Basiselements mit verschiedenen Umgebungsinformationstypen und Umgebungsinformationsmerkmalen; |
| Figur 4 | eine Skizze in der eine Anwendung des Verfahrens dargestellt ist, bei der eine Struktur ein Modell eines physikalischen Objekts darstellt; |
| Figur 5 | ein Ablaufdiagramm, in dem Verfahrensschritte eines Ausführungsbeispiels dargestellt sind; |
| Figur 6 | Prinzip der Bearbeitung einer Struktur, wobei eine neue, in ihrer Lage geänderte Struktur ermittelt wird; |

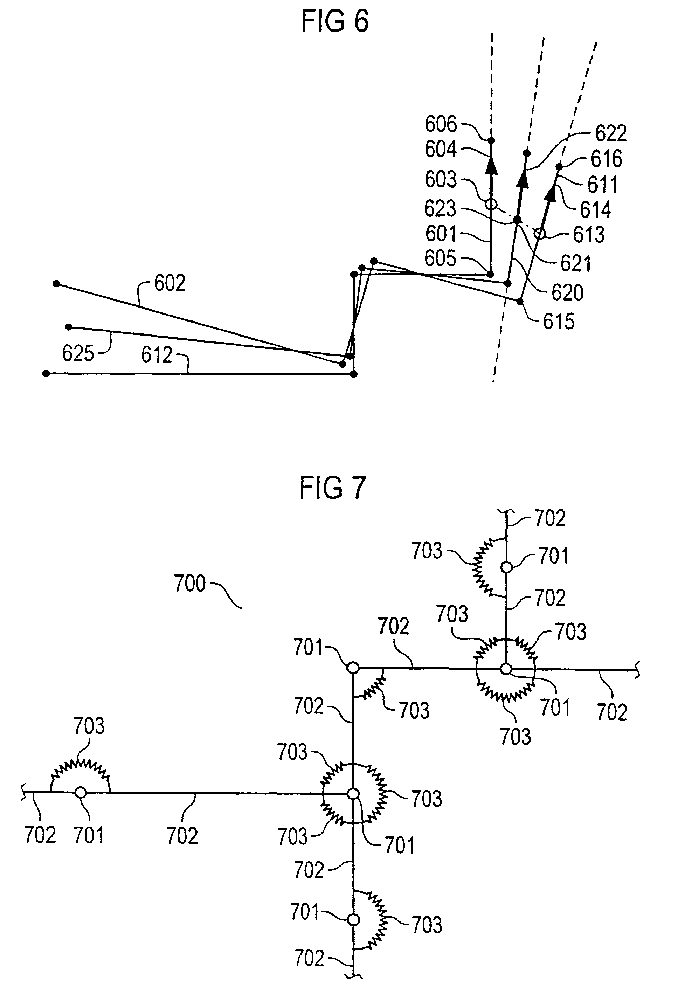

Figur 7 ein Fachwerk mit Knoten, Stäben und Federn.

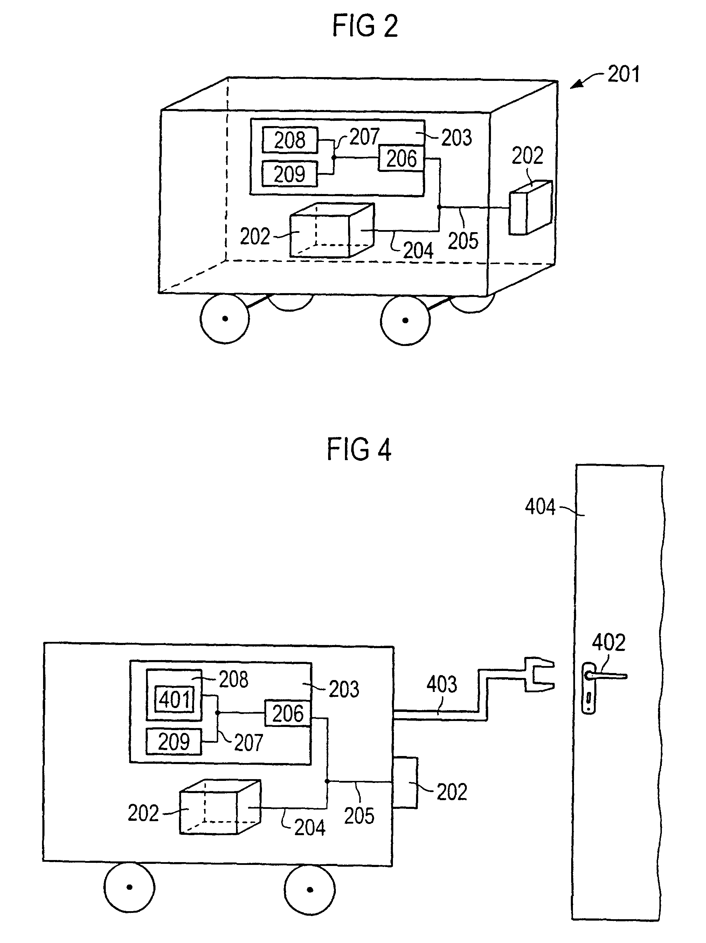

**Fig.2** zeigt einen Roboter 201 mit mehreren Laserscannern 202. Die Laserscanner 202 nehmen Bilder einer Umgebung des Roboters 201 auf und führen die Bilder einer Recheneinheit 203 über Verbindungen 204, 205 zu.

Über eine Eingangs-/ Ausgangsschnittstelle 206, die über einen Bus 207 mit einem Speicher 208 sowie einem Prozessor 209 verbunden ist, werden die Bildsignale dem Speicher 208 zugeführt.

Das im weiteren beschriebene Verfahren wird in dem Prozessor 209 durchgeführt. Somit ist der Prozessor 209 derart eingerichtet, daß die im Weiteren beschriebenen Verfahrensschritte durchführbar sind.

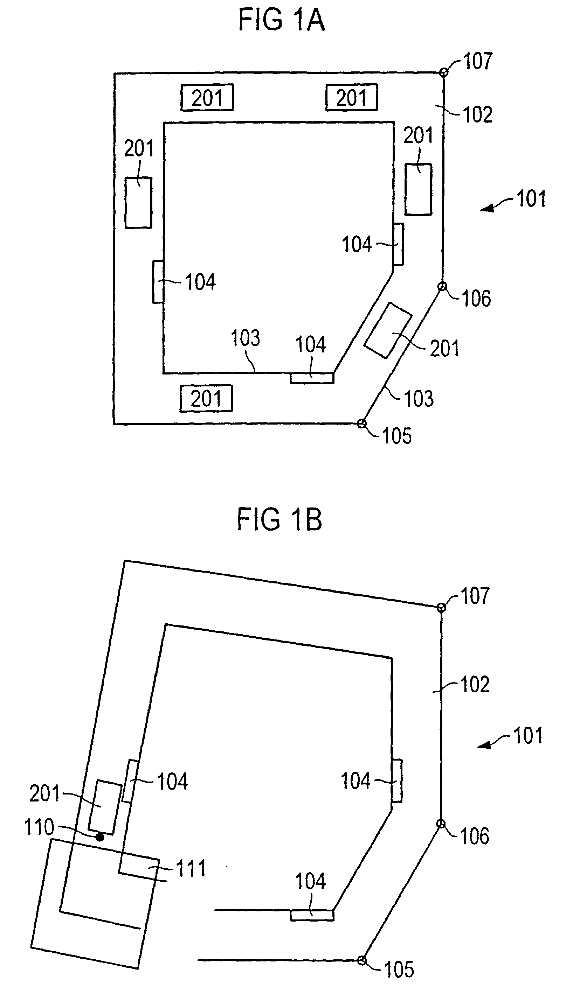

**Fig.1a** zeigt symbolisch eine Landkarte 101, die einen Gang 102 darstellt. Der Roboter 201 bewegt sich durch den Gang und nimmt Bilder seiner Umgebung mit den Laserscannern 202 auf. Dabei nimmt er Wände 103 auf. Der Roboter 201 nimmt zu verschiedenen Zeiten Bilder seiner Umgebung auf, wodurch ein Bild des gesamten Gangs 102 entsteht.

In dem Gang 102 sind ferner Hindernisse 104 in Form von Regalen oder Schränken, die in den Gang 102 hineinragen, vorhanden.

Ecken 105, 106, 107 des Gangs 102 werden als Anfangspunkt bzw. Endpunkt einer Wand, die in Form eines Streckenabschnitts gespeichert wird, interpretiert.

**Fig.1b** stellt die Landkarte aus **Fig.1a** dar, wenn nicht, wie bei der in **Fig.1a** dargestellten Situation vorausgesetzt, ideale Aufnahmen gemacht werden, sondern wenn Fehler bei der Aufnahme durch den Roboter 201 passieren.

Der Roboter 201 bewegt sich in dem Gang 102 und nimmt in periodischen Abständen Bilder seiner Umgebung auf. Aufgrund der aufgenommenen Bilder sowie der gespeicherten Landkarte 101 orientiert sich der Roboter 201.

Die Orientierung erfolgt derart, daß der Roboter 201 die Bilder dem Prozessor 209 zuführt. In dem Prozessor 209 wird ein Ähnlichkeitsvergleich von Elementen des aufgenommenen Bildes mit Elementen der auf der gespeicherten, vorgegebenen Landkarte 101 ermittelt und versucht, daraus die aktuelle Position des Roboters 201 zu bestimmen.

Der Roboter 201 befindet sich an einer Position 110 und nimmt mit seinem Laserscanner einen Bildbereich 111 auf. Diesen Bildbereich 111 versucht er in Übereinstimmung mit der gespeicherten Landkarte 101 zu bringen um somit Information zu seiner Orientierung zu ermitteln.

Dies entspricht dem Vergleich einer ersten Struktur, die den aufgenommenen Bildbereich 111 charakterisiert, mit mindestens einer vorgegebenen zweiten Struktur aus der Landkarte 101.

Zusätzlich zu der Orientierung des Roboters kann der Strukturvergleich auch dazu verwendet werden, eine fehlerhafte Landkarte dahingehend zu verbessern, daß die verbesserte Landkarte eine genauere Beschreibung der Umgebung des Roboters liefert.

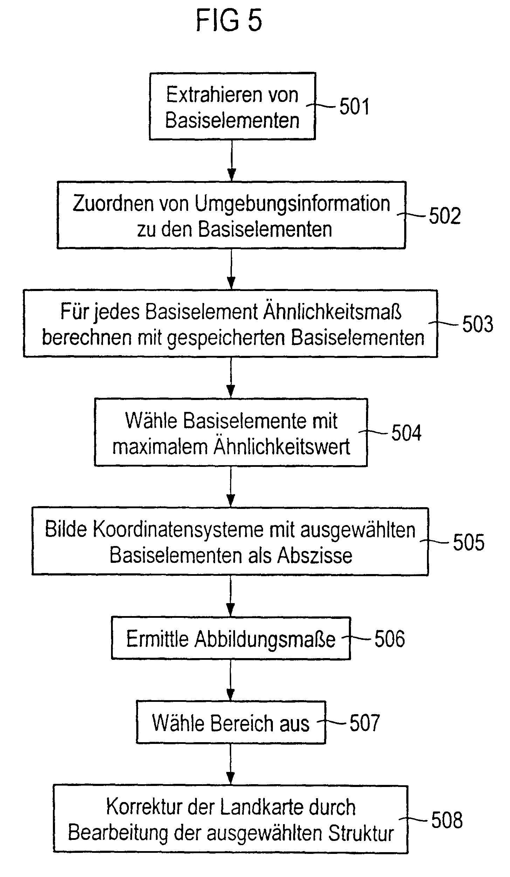

Zu diesem Zweck, der Orientierung des Roboters und der Verbesserung der Landkarte, wird folgendes Verfahren, welches in **Fig.5** dargestellt ist, durchgeführt.

In einem ersten Schritt 501 werden aus dem aufgenommenen Bild 111 von dem Prozessor 209 Basiselemente extrahiert.

Unter einem Basiselement ist eine Strecke mit einem Anfangspunkt und einem Endpunkt zu verstehen, die jeweils eine Wand in dem Gang 102 repräsentiert. Weitere Basiselemente sind Punkte und Linien vorgebbarer Form.

Die Extraktion erfolgt mit bekannten Methoden der Bildverarbeitung.

Nach der Extraktion der Basiselemente liegt das Bild vor, symbolisch repräsentiert durch eine Menge definierter Basiselemente.

Jeweils zusammengehörige Basiselemente werden zu einer zusammenhängenden Struktur, und zwar zu einem Polygonzug, zusammengefaßt.

Jedem Basiselement wird Umgebungsinformation, das heißt Information über andere Basiselemente, welche dem Basiselement benachbart sind, zugeordnet. Die Umgebungsinformation charakterisiert das Basiselement und ermöglicht seine Identifizierung innerhalb der Menge aller Basiselemente.

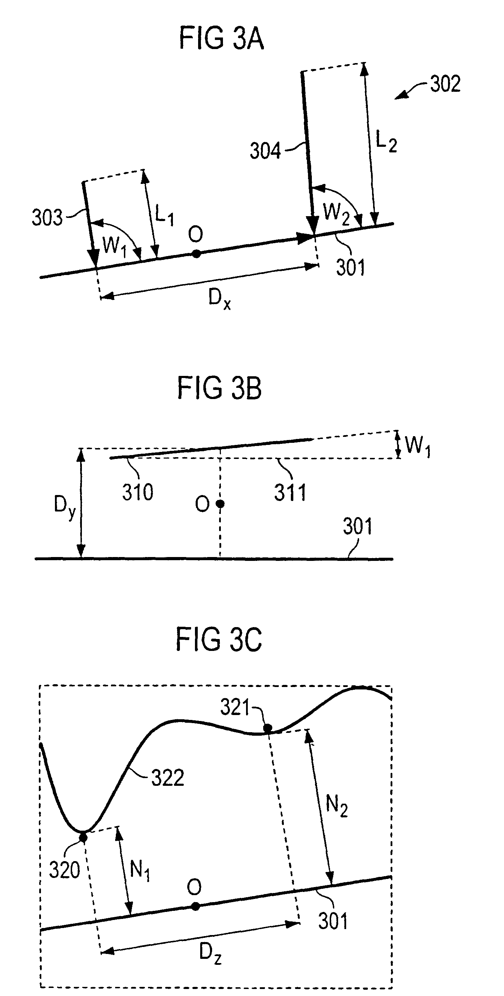

Ein solches Basiselement 301 mit Umgebungsinformation 302, die dem Basiselement zugeordnet ist, ist jeweils in den **Fig.3a** bis **Fig.3c** dargestellt.

Die Umgebungsinformation wird gebildet durch eine Menge weiterer Basiselemente und deren geometrische Anordnung relativ zueinander sowie zu dem Basiselement 301 selbst.

Die Umgebungsinformation, die dem Basiselement 301 zugeordnet wird, wird derart gebildet, daß sie möglichst invariant ist gegen Fehler, die beim Aufbau der Landkarte 101 durch den Roboter 201 auftreten konnen.

Es hat sich herausgestellt, daß ein Paar orthogonaler Basiselemente in Form von Strecken sich für das Verfahren besonders gut eignet. Es ist dabei anzumerken, daß es nicht auf eine exakte Orthogonalität der Basiselemente ankommt, sondern daß eine Toleranz ohne weiteres in Kauf genommen werden kann.

Die Umgebungsinformation, die dem Basiselement 301 zugeordnet wird, ist der Abstand der Schnittpunkte parallel zueinander ausgerichteter Basiselemente mit dem Basiselement 301, in **Fig.3a** mit Dx bezeichnet.

Ferner wird als Umgebungsinformation ein erster Winkel W1, der einen Schnittwinkel eines ersten weiteren Basiselements 303, welches eine Länge L1 aufweist, mit dem Basiselement 301, bildet, gespeichert.

Ferner wird ein zweiter Winkel W2, der einen Schnittwinkel des zweiten weiteren Basiselements 304 mit dem Basiselement 301 bezeichnet sowie die Lange L2 des zweiten weiteren Basiselements 303 als Umgebungsinformation dem Basiselement 301 zugeordnet.

Weitere, dem Basiselement 301 zugeordnete Umgebungsinformation ist eine Angabe des Startpunkts und/ oder des Endpunkts sowie damit auch eine Orientierung jeweils des ersten und/oder des zweiten Basiselements 303, 304.

Die Umgebungsinformation wird als Liste, die dem Basiselement 301 zugeordnet wird, gespeichert. Die Liste ist in vorgebbarer Weise sortiert.

Das Paar orthogonaler Basiselemente, wie in **Fig.3a** dargestellt als Umgebungsinformation, bildet einen Umgebungsinformationstyp.

Die oben beschriebenen einzelnen Elemente, die als Umgebungsinformation dem Basiselement 301 zugeordnet werden, bilden Umgebungsinformationsmerkmale, die jeweils dem Umgebungsinformationstyp zugeordnet werden.

Ein zweiter Umgebungsinformationstyp ist ein zu dem Basiselement 301 paralleles weiteres Basiselement 310 (vgl. **Fig.3b**).

Wiederum ist keine exakte Parallelität des weiteren Basiselements 310 zu dem Basiselement 301 erforderlich. Als Umgebungsinformationsmerkmale werden ein Abstand Dy zwischen dem Basiselement 301 und dem weiteren, parallelen Basiselement 303 sowie ein dritter Winkel W3 zwischen der exakten Parallele 311 des ersten Basiselements 301, verschoben um den Abstand Dy, und der tatsächlichen Lage des weiteren, parallelen Basiselements 310 gespeichert.

**Fig.3c** zeigt einen weiteren Umgebungsinformationstyp in Form von Punkten 320, 321, die Punkte einer Linienstruktur 322 bezeichnen, die am nächsten zu dem Basiselement 301 liegen.

In diesem Fall werden ein Abstand zwischen diesen Punkten 320, 321 (bezeichnet als Dz) sowie die kürzesten Abstände N1, N2 der Punkte 320, 321 zu dem Basiselement 301 als Umgebungsinformationsmerkmale gespeichert.

In der vorgegebenen, gespeicherten Landkarte 101 sind den Basiselementen in gleicher Weise jeweils Umgebungsinformationen zugeordnet. Somit weist die gespeicherte Landkarte 101 eine Menge von Basiselementen mit jeweils den Basiselementen zugeordneter Umgebungsinformation in Form von Umgebungsinformationstypen mit den dem Umgebungsinformationstypen zugeordneten Umgebungsinformationsmerkmalen auf.

Es werden also in einem zweiten Schritt 502 die Umgebungsinformationen jeweils den Basiselementen, die in dem Bildbereich 111 enthalten sind, sowie den in der Landkarte 101 enthaltenen Basiselementen zugeordnet.

Für jedes Basiselement 301 wird in einem weiteren Schritt 503 mit allen weiteren Basiselementen ein Wert eines Ähnlichkeitsmaßes gebildet.

Im weiteren wird das Ähnlichkeitsmaß näher erläutert.

In diesem Ausführungsbeispiel wird davon ausgegangen, daß ein Gesamtwert U der Umgebungsinformation, die dem Basiselement 301 jeweils zugeordnet ist, sich gemäß folgender Vorschrift ergibt:

$$U = (OP, P, MP),$$

wobei mit

- OP die Umgebungsinformationsmerkmale, die von Paaren von senkrecht zueinander orientierten weiteren Basiselementen gebildet wird,
- P die Umgebungsinformationsmerkmale, gebildet von parallelen Basiselementen, und
- MP die Umgebungsinformationsmerkmale der punktformigen Umgebungsinformationstypen,

bezeichnet werden.

Die Umgebungsinformationsmerkmale liegen in Form von sortierten Listen vor.

Es sei

$$v: U \times U \to \Re_0^+$$

eine formale Definition einer Vergleichsfunktion.

Mit der Vergleichsfunktion v wird zu einem Paar von jeweils zwei Basiselementen zugeordneten Umgebungsinformationen ein Vergleichswert berechnet. Je höher der Vergleichswert ist, desto besser stimmen die beiden Umgebungsinformationsmerkmale der Basiselemente miteinander überein. Zur Definition der Vergleichsfunktion v werden folgende drei Funktionen vOP, vP, vMP definiert:

$$vOP: OP \times OP \to \Re_0^+$$
$$vP: P \times P \to \Re_0^+$$

$$vMP: MP \times MP \rightarrow \Re_0^+,$$

wobei mit vOP ein Vergleichswert für Umgebungsinformationsmerkmale des Umgebungsinformationstyps mit senkrechten weiteren Basiselementen beschrieben wird und analog mit vP ein Vergleichswert beschrieben wird von Umgebungsinformationsmerkmalen des Umgebungsinformationstyps mit parallelen Basiselementen. Mit vMP wird ein Vergleichswert beschrieben, der Umgebungsinformationsmerkmale des Umgebungsinformationstyps mit Punkten als Umgebungsinformationsmerkmale ermittelt.

Die Vergleichsfunktion v wird als gewichtete Summe der Funktionen vOP, vP und vMP gemäß folgender Vorschrift definiert.

$$v(U1, U2) = aOP * vOP(OP1, OP2) + aP * vP(P1, P2) + aMP *$$

$$* vMP(MP1, MP2).$$

Die Werte aOP, aP und aMP im Zahlenintervall [0,1] werden als Gewichtswerte bezeichnet.

Mit den Gewichtswerten aOP, aP und aMP werden die unterschiedliche Bedeutungen der einzelnen Umgebungsinformationstypen hinsichtlich des Ahnlichkeitsmaßes berücksichtigt. Es hat sich herausgestellt, daß der Umgebungsinformationstyp der Paare von orthogonalen weiteren Basiselementen OP eine höhere Aussagekraft hinsichtlich des Ahnlichkeitsmaßes als der Umgebungsinformationstyp der parallelen weiteren Basiselemente P und dieser wiederum eine höhere Aussagekraft als der Umgebungsinformationstyp mit Punkten als Umgebungsinformationsmerkmalen besitzt.

Für jede Funktion vOP, vP, vMP wird für jedes Basiselement und deren Umgebungsinformationsmerkmale jeweils ein Verfahren der dynamischen Programmierung durchgeführt, wodurch ein Zwischenahnlichkeitswert gebildet wird.

Dies erfolgt jeweils für jede Funktion vOP, vP, vMP unter Verwendung der folgenden Kostenfunktion $D_{i,j}$:

$$D_{i,j} = \min \begin{cases} D_{i-1,j} + \delta \\ D_{i-1,j-1} + \mu, \\ D_{i,j-1} + \delta \end{cases}$$

mit

- $\delta$, einem vorgebbaren Kostenwert, der auftritt, wenn ein Umgebungsinformationsmerkmal des aufgenommenen Bildbereichs nicht einem Umgebungsinformationsmerkmal der gespeicherten Landkarte 101 zugeordnet werden kann,
- $\mu = \frac{\delta}{\lambda}$, mit
- 

$$\lambda = \prod_{k=1}^{n} \left( \max \left\{ 0,1 - \frac{|a_{k,i} - a_{k,j}|}{MaxErr_k} \right\} \right).$$

Mit
- k wird ein Index, der jeden Umgebungsinformationstyp, welcher im Rahmen der Dynamischen Programmierung berücksichtigt wird, eindeutig bezeichnet,
- n wird die Anzahl berücksichtigter Basiselemente bezeichnet,
- $a_{k,i}$ und $a_{k,j}$ werden die einzelnen Umgebungsinformationsmerkmale, die in der sortierten Liste der jeweiligen Umgebungsinformationstypen gespeichert sind, bezeichnet, wobei $a_{k,i}$ ein Umgebungsinformationsmerkmal eines Basiselements des Bildbereichs 111 und $a_{k,j}$ ein Umgebungsinformationsmerkmal eines Basiselements der Landkarte 101 bezeichnet,
- $MaxErr_k$ wird ein vorgebbarer, für jeden Umgebungsinformationstyp spezifischer Wert bezeichnet.

Der Kostenwert δ ist empirisch so zu bestimmen, daß bei der gegebenen Anwendung

$2 \cdot \delta > \mu$ ist, falls die Zuordnung korrekt ist, und

$\mu > 2 \cdot \delta$ ist, falls die Zuordnung nicht korrekt ist.

Es hat sich folgendes Verhaltnis der einzelnen Gewichtswerte als vorteilhaft herausgestellt:

aOP : aP : aMP = 3 : 2 : 1.

Das Ergebnis der Vergleichsfunktion v bildet einen Wert des Ähnlichkeitsmaßes, mit dem die Ahnlichkeit der ersten Struktur in dem Bildbereich 111 und der zweiten Struktur in der Landkarte 101 beschrieben wird (Schritt 503).

In einem weiteren Schritt 504 wird das Paar von Basiselementen aus der ersten Struktur bzw. der zweiten Struktur ausgewählt, welches Paar den höchsten Wert des Zwischenahnlichkeitswerts aufweist und somit am ahnlichsten zueinander ist.

Für die ausgewählten Basiselemente wird ein kanonisches Koordinatensystem in cer jeweiligen Landkarte gebildet, dessen Abszisse durch das jeweilige Basiselement gebildet wird (Schritt 505).

In einem weiteren Schritt 506 wird anschließend ein Abbildungsmaß ermittelt. Mit dem Abbildungsmaß wird für die ausgewählten Basiselemente ermittelt, welcher Betrag einer Translation bzw. Rotation erforderlich ist, um das Koordinatensystem für das Basiselement der ersten Struktur jeweils auf ein Koordinatensystem eines Basiselements einer weiteren Struktur abzubilden.

In dem Schritt 506 wird anschaulich also jeweils ermittelt, wie sehr das Koordinatensystem des ausgewählten Basiselements der ersten Struktur verschoben bzw. "gedreht" werden muß, um zu dem Koordinatensystem des ausgewählten Basiselements jeweils einer weiteren Struktur zu "passen".

Es wird der Bereich in der vorgegebenen Landkarte ausgewählt, dessen Abbildungsmaß und/oder dessen Ähnlichkeitsmaß minimal ist verglichen mit dem Koordinatensystem für das Basiselement der ersten Struktur.

Ausgehend von dem ausgewählten Basiselement werden weitere Basiselemente paarweise (d.h. jeweils ein Basiselement der ersten Struktur und ein Basiselement der zweiten Struktur) ausgewählt, deren Werte der Ahnlichkeitsmaße größer sind als ein vorgebbarer Schwellenwert.

Nun ist dem Roboter 201 bekannt, wo er sich innerhalb der Landkarte 101 befindet.

Somit wird in einem Schritt 507 der Bereich in der vorgegebenen Karte 101 bestimmt, in dem der Roboter 201 sich befindet.

Nach Abschluß des Schrittes 507 liegen das erste ausgewählte Basiselement und die zugehörige Struktur in dem Bildbereich 111 und das entsprechende ausgewählte Basiselement und die zugehörige zweite Struktur in dem ausgewählten Bereich der Landkarte 101 vor.

In einem weiteren Schritt 508 werden die Lage des ausgewählten Basiselements und die Lage der zugehörigen zweiten Struktur in dem ausgewählten Bereich aus der Landkarte 101 unter Verwendung der Lagen der entsprechenden Elemente der ersten Struktur in dem Bildbereich 111 verändert bzw. korrigiert (vgl. Fig.6).

In Fig.6 ist ein ausgewähltes Basiselement 601 und eine zugehörige zweite Struktur 602 in einer Landkarte sowie ein entsprechendes ausgewähltes Basiselement 611 und eine zugehörige erste Struktur 612, welche in dem Bildbereich ermittelt und in ebenfalls in die Landkarte eingetragen wurden, in der Landkarte dargestellt.

Die erste 612 und die zweite 602 Struktur ist in Fig.6 jeweils durch einen Polygonzug dargestellt, wobei jeweils ein erstes Polygon (Anfangspolygon) 601, 611 des Polygonzugs das ausgewählte Basiselement ist.

Das Basiselement 611, 601 der ersten 612 und der zweiten 602 Struktur wird jeweils durch eine erste 614 bzw. zweite 604 Orientierung und einen ersten 613 bzw. zweiten 603 Punkt beschrieben.

Die erste 614 bzw. zweite 604 Orientierung wird derart ermittelt, daß unter Verwendung eines Anfangspunkts 615, 605 und eines Endpunkts 616, 606 des ersten bzw. zweiten Basiselements 611, 601 eine erste 614 bzw. zweite 604 Richtung ermittelt wird. Der erste 613 bzw. zweite 603 Punkt ist jeweils der Mittelpunkt des Basiselements.

Es ist anzumerken, daß ein Basiselement unter Verwendung beliebiger, anderer geometrischer Repräsentanten beschrieben werden könnte, welche die Orientierung des Basiselements eindeutig beschreiben, beispielsweise einen Anfangspunkt und einen Endpunkt des Polygons oder eine Anfangspunkt und eine Richtung des Polygons.

Eine neue, korrigierte Lage bzw. Richtung 624 des Basiselements 621 (Anfangspolygon) wird derart ermittelt, daß ein Mittelwert für die erste 614 und die zweite 604 Richtung bestimmt wird. Ein neuer korrigierter Punkt 623 wird derart bestimmt, daß ein Mittelpunkt einer Strecke, welche den ersten Punkt 613 und den zweiten 603 Punkt verbindet, bestimmt wird.

Somit gilt für die neue korrigierte Lage n' des Basiselements 621:

$$n' = (x',y',\beta') = \left(\frac{x_k + x_l}{2}, \frac{y_k + y_l}{2}, m(\beta_k, \beta_l)\right) \tag{1}$$

und

$$m(\beta_k, \beta_l) = 0.5 * \arctan\left(\begin{pmatrix} \cos \beta_k \\ \sin \beta_k \end{pmatrix}\begin{pmatrix} \cos \beta_l \\ \sin \beta_l \end{pmatrix}\right) \qquad (2)$$

mit

- k,l Index für ein Basiselement der ersten bzw. der zweiten Struktur
- x,y Koordinate in einem karthesischen Koordinatensystem
- $\beta$ Richtungswinkel eines Basiselements in dem karthesischen Koordinatensystem
- ' Index für die neue korrigierte Lage
- arctan(...) Winkelfunktion.

Die neuen korrigierten Lagen 625 der sonstigen Elemente der korrigierten Struktur werden derart ermittelt, daß eine Energie, welche für die Veranderungen der 625 Lagen der anderen Elemente nötig ist, minimal ist.

Anschaulich läßt sich diese Vorgehensweise derart verdeutlichen, daß eine Struktur durch ein Fachfachwerk 700, das aus Knoten 701 und an Knoten 701 gelenkig miteinander verbundenen Stäben 702 aufgebaut ist, beschrieben wird (Fig. 7). Jeweils zwei miteinander verbundene Stäbe 702 sind durch Federn 703 gekoppelt.

Eine Veränderung einer Lage eines Stabes 702 führt zu Verspannungen von den mit dem Stab 702 verbundenen Federn 703, wobei für diese Verspannungen eine Energie (Federenergie) aufgewendet werden muß. Bei einer Veränderung einer Lage eines Stabes 702 (Anfangspolygon) werden die Lagen der anderen miteinander verbundenen Stäbe 702 derart eingestellt, daß die gesamte Federenergie e, welche für die Verspannung aller Federn 703 aufzubringen ist, minimal ist.

Diese Optimierungsaufgabe läßt sich wie folgt beschreiben:

$$e = \sum_{(i,j)\in N}\left(\frac{(d_{ij} - \hat{d}_{ij})^2}{w^d_{i,j}} + \frac{(\Delta\alpha_{i,j})^2}{w^\alpha_{i,j}} + \frac{(\Delta\alpha_{j,i})^2}{w^\alpha_{j,i}}\right) \rightarrow \min \qquad (3)$$

wobei gilt:

$$\Delta\alpha_{i,j} = \arctan\left(\frac{(-\Delta x \sin \gamma_i + \Delta y \cos \gamma_i)}{(\Delta x \cos \gamma_i + \Delta y \sin \gamma_i)}\right) \qquad (4)$$

$$\Delta x = x_i - x_j \qquad (5)$$

$$\Delta y = y_i - y_j \qquad (6)$$

$$\gamma_i = \beta_i - \alpha_{i,j} \qquad (7)$$

$$\gamma_j = \beta_j - \alpha_{j,i} \qquad (8)$$

mit

- i,j Index für einen Knoten 701 der ersten bzw. der zweiten Struktur
- d, d neuer Abstand bzw. ursprünglicher Abstand zwischen zwei Knoten 701 in dem cartesischen Koordinatensystem

- w Gewichte
- α Richtungswinkel einer Verbindung zwischen zwei Knoten 701
- γ Winkel in dem cartesischen Koordinatensystem
- Δ... Änderung.

Als ein Optimierungsverfahren wird das Verfahren des Steilsten Abstiegs, welches in [2] beschrieben ist, verwendet.

Auf diese Weise werden die neuen, korrigierten Lagen der sonstigen Elemente der Struktur 625 ermittelt. Die neue, korrigierte Struktur 625 wird anstelle der zweiten Struktur 602 in die Landkarte eingetragen und gespeichert.

Das beschrieben Verfahren hat den Vorteil, daß mit dem Verfahren die Position des Roboters in dem Raum bzw. in der Landkarte ermittelt wird und zugleich Bereiche aus der Landkarte verändert bzw. korrigiert werden.

Somit wird bei einer Bewegung des Roboters in dem Raum die Landkarte wahrend der Bewegung des Roboters ständig korrigiert.

Im weiteren werden einige Alternativen des oben beschriebenen Ausfuhrungsbeispiels aufgezeigt:

Für die Lösung der in Schritt 508 beschrieben Optimierungsaufgabe (vgl. Formel ) konnen auch das Verfahren der Konjugierten Gradienten oder ein Quasi-Newton-Verfahren verwendet werden.

Langgestreckte Elemente, insbesondere lange Stecken oder Polygone, einer Struktur konnen in mehrere Teilelemente, Teilstrecken bzw. Teilpolygone, unterteilt werden. Damit erhöht sich die Zahl der Stäbe entsprechend der Unterteilung. Die Formeln (1)-(8) sind aber gleichermaßen anzuwenden.

Im Rahmen dieses Dokuments wurden folgende Veröffentlichungen zitiert:

[1] O. Karch und H. Noltemeier, Autonome Mobile Systeme 1996, G. Schmidt und F. Freyberger, (Hg.), Zum Lokalisationsproblem für Roboter, Springer Verlag, ISBN 3-54061-751-5, S. 128 - 137, 1996

[2] W.H. Press, et al., Numerical Recipes in C, The Art of Scientific Computing, Cambridge University Press, Cambridge, New York, Melbourne, pp. 317-324, 1988

**Patentansprüche**

1.  Verfahren zum rechnergestützten Bearbeiten einer Struktur, welche mindestens aus einem ersten Element und einem zweiten Element, welche in der Struktur miteinander gekoppelt sind, aufgebaut ist,

    -   bei dem unter Verwendung einer ersten Position des ersten Elements und einer veränderten zweiten Position des ersten Elements eine dritte Position des ersten Elements ermittelt wird;
    -   bei dem bei der Bearbeitung der Struktur unter Verwendung der dritten Position des ersten Elements zumindest eine vierte Position des zweiten Elements der Struktur verändert wird.

2.  Verfahren nach Anspruch 1,
    bei dem ein Element mindestens durch einen Punkt und eine Linie vorgebbarer Form beschrieben wird.

3.  Verfahren nach Anspruch 2,
    bei dem eine Position eines Elements durch den Punkt des Elements und eine Orientierung, welche die Linie des Elements aufweist, beschrieben wird.

4.  Verfahren nach Anspruch 3,
    bei dem die dritten Position des ersten Elements derart ermittelt wird, dass ein Winkel zwischen einer ersten Orientierung der ersten Position des ersten Elements und einer zweiten Orientierung der zweiten Position des ersten Elements ermittelt wird, der Winkel gemittelt wird und eine Richtung des gemittelten Winkels eine dritte Orientierung der dritten Position des ersten Elements beschreibt.

5.  Verfahren nach einem der Ansprüche 1 bis 4,
    bei dem die vierte Position des zweiten Elements derart verändert wird, dass eine Energie, welche für eine Veränderung zumindest einer Position des ersten Elements und einer Position des zweiten Elements aufgewendet werden muss, minimiert wird.

6.  Verfahren nach einem der Ansprüche 1 bis 5,
    bei dem die bearbeitete Struktur in eine Karte eingetragen wird.

**7.** Verfahren nach Anspruch 6,
bei dem die Karte mit einem Aufnahmemittel aufgenommen wird.

**8.** Verfahren nach Anspruch 7,
bei dem die Karte zumindest mit einem der folgenden Aufnahmemittel aufgenommen wird:

- mit einem akustischen Sensor;
- mit einem optischen Sensor, insbesondere eine Kamera.

**9.** Verfahren nach Anspruch 5,
bei dem die Karte zu einer Fahrwegplanung einer mobilen autonomen Vorrichtung eingesetzt wird.

**10.** Verfahren nach einem der Ansprüche 1 bis 8,
bei dem unter Verwendung der geänderten Struktur eine mobile Vorrichtung überwacht und/oder gesteuert wird.

**11.** Verfahren nach Anspruch 10,
bei dem als die mobile Vorrichtung ein Roboter verwendet wird.

**12.** Anordnung zum rechnergestützten Bearbeiten einer Struktur, welche mindestens aus einem ersten Element und einem zweiten Element, welche in der Struktur miteinander gekoppelt sind, aufgebaut ist, mit einem Prozessor, der derart eingerichtet ist, dass folgende Schritte durchführbar sind,

- unter Verwendung einer ersten Position des ersten Elements und einer veränderten zweiten Position des ersten Elements wird eine dritte Position des ersten Elements ermittelt;
- bei der Bearbeitung der Struktur wird unter Verwendung der dritten Position des ersten Elements zumindest eine vierte Position des zweiten Elements der Struktur verändert.

**Claims**

**1.** Method for the computer-assisted processing of a structure comprising a first element and a second element belonging together,

- in which a third position of the first element is determined by using a first position of the first element and a changed second position of the first element;
- in which, on processing the structure, at least one fourth position of the second element of the structure is changed by using the third position of the first element.

**2.** Method according to Claim 1, in which an element is described by at least one point and a line of predefinable shape.

**3.** Method according to Claim 2, in which a position of an element is described by the point of the element and an orientation of the line of the element.

**4.** Method according to Claim 3, in which the third position of the first element is determined by an angle between a first orientation of the first position of the first element and a second orientation of the second position of the first element being determined, the angle being averaged and a direction of the averaged angle describing a third orientation of the third position of the first element.

**5.** Method according to one of Claims 1 to 4, in which the fourth position of the second element is changed in such a way that the energy which has to be expended for a change in at least one position of the first element and one position of the second element is minimized.

**6.** Method according to one of Claims 1 to 5, in which the processed structure is entered in a map.

**7.** Method according to Claim 6, in which the map is recorded by using a recording means.

**8.** Method according to Claim 7, in which the map is recorded at least with one of the following recording means:

- with an acoustic sensor;
- with an optical sensor, in particular a camera.

9. Method according to Claim 5, in which the map is used for planning the travel path of a mobile autonomous device.

10. Method according to one of Claims 1 to 8, in which a mobile device is monitored and/or controlled by using the changed structure.

11. Method according to Claim 10, in which a robot is used as the mobile device.

12. Arrangement for the computer-assisted processing of a structure comprising a first element and a second element which belong together, having a processor which is set up in such a way that the following steps can be carried out

- a third position of the first element is determined by using a first position of the first element and a changed second position of the first element;
- on processing the structure, at least one fourth position of the second element of the structure is changed by using the third position of the first element.

**Revendications**

1. Procédé destiné au traitement assisté par ordinateur d'une structure constituée au moins d'un premier élément et d'un deuxième élément, qui sont couplés l'un à l'autre dans la structure,

- dans lequel, en utilisant une première position du premier élément et une deuxième position modifiée du premier élément, on détermine une troisième position du premier élément;
- dans lequel, lors du traitement de la structure, on modifie, en utilisant la troisième position du premier élément, au moins une quatrième position du deuxième élément de la structure.

2. Procédé selon la revendication 1
dans lequel un élément est décrit au moins par un point et une ligne d'une forme qui peut être prédéterminée.

3. Procédé selon la revendication 2
dans lequel une position d'un élément est décrite par le point de l'élément et une orientation, laquelle comprend la ligne de l'élément.

4. Procédé selon la revendication 3
dans lequel la troisième position du premier élément est déterminée de telle manière qu'on détermine un angle entre une première orientation de la première position du premier élément et une deuxième orientation de la deuxième position du premier élément, qu'on calcule la moyenne de l'angle et qu'une direction de l'angle moyen décrit une troisième orientation de la troisième position du premier élément.

5. Procédé selon l'une des revendications 1 à 4
dans lequel la quatrième position du deuxième élément est modifiée de telle sorte qu'une énergie, qu'il faut mettre en oeuvre pour une modification de au moins une position du premier élément et une position du deuxième élément, est la plus faible.

6. Procédé selon l'une des revendications 1 à 5
dans lequel la structure traitée est inscrite sur une carte.

7. Procédé selon la revendication 6
dans lequel la carte est enregistrée à l'aide d'un moyen d'enregistrement.

8. Procédé selon la revendication 7
dans lequel la carte est enregistrée avec au moins l'un des moyens d'enregistrement suivants:

- avec un capteur acoustique;
- avec un capteur optique, notamment avec une caméra.

9. Procédé selon la revendication 5
   dans lequel la carte est utilisée pour la planification d'un trajet d'un système autonome mobile.

10. Procédé selon l'une des revendications 1 à 8
    dans lequel, en utilisant la structure modifiée, on surveille et/ou on contrôle un système mobile.

11. Procédé selon la revendication 10
    dans lequel on utilise un robot en tant que système mobile.

12. Dispositif destiné au traitement assisté par ordinateur d'une structure constituée au moins d'un premier élément et d'un deuxième élément, lesquels sont couplés l'un à l'autre dans la structure, et comportant un processeur conçu de telle manière que les étapes suivantes peuvent être exécutées:

    - en utilisant une première position du premier élément et une deuxième position modifiée du premier élément, on détermine une troisième position du premier élément;
    - lors du traitement de la structure, on modifie, en utilisant la troisième position du premier élément, au moins une quatrième position du deuxième élément de la structure.

## FIG 1A

## FIG 1B

FIG 2

FIG 4

## FIG 3A

## FIG 3B

## FIG 3C

# FIG 5

```
┌─────────────────────┐
│   Extrahieren von   │──── 501
│   Basiselementen    │
└─────────────────────┘
           │
           ▼
┌───────────────────────────────┐
│ Zuordnen von Umgebungsinformation │──── 502
│      zu den Basiselementen     │
└───────────────────────────────┘
           │
           ▼
┌─────────────────────────────────────────┐
│  Für jedes Basiselement Ähnlichkeitsmaß  │──── 503
│ berechnen mit gespeicherten Basiselementen │
└─────────────────────────────────────────┘
           │
           ▼
┌──────────────────────────┐
│   Wähle Basiselemente mit │──── 504
│  maximalem Ähnlichkeitswert │
└──────────────────────────┘
           │
           ▼
┌─────────────────────────────────────────┐
│ Bilde Koordinatensysteme mit ausgewählten │──── 505
│      Basiselementen als Abszisse         │
└─────────────────────────────────────────┘
           │
           ▼
┌─────────────────────────┐
│  Ermittle Abbildungsmaße │──── 506
└─────────────────────────┘
           │
           ▼
┌─────────────────────┐
│   Wähle Bereich aus │──── 507
└─────────────────────┘
           │
           ▼
┌───────────────────────────────────────┐
│      Korrektur der Landkarte durch     │──── 508
│ Bearbeitung der ausgewählten Struktur  │
└───────────────────────────────────────┘
```

## FIG 6

## FIG 7